Europäisches Patentamt

European Patent Office

Office européen des brevets

(19)

(11) **EP 1 477 304 A1**

(12) **EUROPEAN PATENT APPLICATION**
published in accordance with Art. 158(3) EPC

| | |
|---|---|
| (43) Date of publication:<br>**17.11.2004 Bulletin 2004/47** | (51) Int Cl.[7]: **B32B 27/08**, B32B 27/00,<br>C08L 91/06, B65D 1/00 |
| (21) Application number: **03706985.3** | (86) International application number:<br>**PCT/JP2003/001872** |
| (22) Date of filing: **20.02.2003** | |
| | (87) International publication number:<br>**WO 2003/070459 (28.08.2003 Gazette 2003/35)** |

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **21.02.2002 JP 2002044429**

(71) Applicant: **Kao Corporation**
**Tokyo 103-8210 (JP)**

(72) Inventors:
• **ISSHIKI, N., c/o Kao Corporation, Research Lab.**
**Haga-gun, Tochigi 321-3497 (JP)**
• **ODAJIMA, S.,**
**c/o Kao Corporation, Research Lab.**
**Haga-gun, Tochigi 321-3497 (JP)**
• **GOTO, M., c/o Kao Corporation, Research Lab.**
**Haga-gun, Tochigi 321-3497 (JP)**

(74) Representative: **VOSSIUS & PARTNER**
**Siebertstrasse 4**
**81675 München (DE)**

(54) **BIODEGRADABLE FILM**

(57) A biodegradable film having a biodegradable moisture barrier layer between two biodegradable resin layers. The moisture barrier layer is preferably made mainly of a biodegradable wax. The moisture barrier layer preferably contains the biodegradable wax and a biodegradable, heat-resistant polymer. The polymer is preferably natural rubber or polyisoprene.

EP 1 477 304 A1

**Description**

Technical Field:

The present invention relates to a biodegradable film and abiodegradable container and biodegradable moistureproof paper having the film. More particularly, it relates to a biodegradable film having heat resistance and moisture proof, and a biodegradable container and a biodegradable moistureproof paper having the biodegradable film.

Background Art:

In recent years, the increasing environmental consciousness has been directing attention to application of biodegradable resins to packaging containers for foods and commodities. After disposal, containers made of biodegradable resins can be broken down by bacteria and return to soil even buried in a landfill or left to stand under natural environmental conditions . Besides, studies have been given to utility of food packaging containers made of biodegradable resins as a material that can be composted together with organic waste such as garbage or a material of methane fermentation. Under these circumstances, practical application and spread of packaging containers made of biodegradable resins have been awaited.

The film described in Japanese Patent 317869 is among conventional techniques pertinent to biodegradable packaging films. This film contains a polylactic acid as amajor component and a predetermined amount of a plasticizer having at least two carboxylic acid ester groups per molecule.

The film is, while biodegradable, so poor in moisture proofness that it is inapplicable to packaging containers for articles demanding barrier against moisture during storage.

In order to make a non-moistureproof film moistureproof, it is known to form a moistureproof layer made mainly of a wax by coating with a wax emulsion and a synthetic rubber emulsion as disclosed in JP-A-59-66598.

However, lacking thermoformability, such a wax moistureproof layer must be applied after molding a container by wet coating, vacuum deposition or like methods, which makes the production process complicated. Moreover, because biodegradable waxes such as natural waxes have a melting point of 85°C or lower, they are not allowed to be applied to containers requiring moisture proofness during storage and water resistance, particularly hot water resistance, during cooking or eating and drinking, such as containers for ready-to-eat instant foods like soup powder and instant noodle.

Other known, thermoformable, and biodegradable films have a water vapor transmission rate of 4 to 30 g·mm/ m²·24hr and are therefore unfit for use in food containers and the like that demand moisture proofness.

The biodegradable container of JP-A-11-171238 is also included under known techniques relating to biodegradable containers having a thermoformable film. This biodegradable container comprises a pulp-molded container body having the surface thereof coated with a polyethylene film containing a degradation assistant. Although the polyethylene film of the container is broken into fine fragments by the degradation assistant, the polyethylene resin itself is not chemically decomposed.

An object of the present invention is to provide a biodegradable film with excellent moisture proofness and a biodegradable container and biodegradable moistureproof paper having the biodegradable film.

Disclosure of the Invention:

The present invention accomplishes the above object by providing a biodegradable film having two biodegradable resin layers and a biodegradable moisture barrier layer interposed between the resin layers.

The present invention also accomplishes the above object by providing a biodegradable container having a biodegradable container body coated with the biodegradable film of the present invention.

The present invention also provides biodegradable moistureproof paper having biodegradable paper coated with the biodegradable film of the present invention.

The present invention also provides a biodegradable container formed of the biodegradable moistureproof paper of the present invention.

Best Mode for Carrying out the Invention:

The biodegradable film of the present invention will be described with reference to its preferred embodiments. The term "biodegradable (film)" as used herein means that main components constituting the film have biodegradability. The term is not intended to mean that all the components including additives, such as antioxidants and slip agents, should be biodegradable. Nevertheless, it is desirable that every film constituent component be decomposable to its naturally occurring state.

The biodegradable film of the present invention is described first. The biodegradable film of the invention has two biodegradable resin layers and a biodegradable moisture barrier layer sandwiched between the biodegradable resin layers.

Resins that can be used to make the biodegradable resin layers preferably include aliphatic polyester resins, aliphatic polyester/aromatic polyester copolymer resins, and aliphatic polycarbonate resins. Examples of the resins are polyethylene succinate (PES), polybutylene succinate (PBS), polylactic acid (PLA), polyglycolic acid (PGA), polyhydroxybutyrate (PHB), polycaprolactone (PCL), polycaprolactone/polybutylene succinate mixtures or copolymers (PCL/PBS), polyhydroxybutyrate/polyhydroxyvalerate copolymers (PHB/PHV), polybutylene succinate/polybutylene adipate mixtures or copolymers (PBS/PBA), polyethylene terephthalate/polyethylene succinate copolymers (PET/PES), and polybutylene terephthalate/polybutylene adipate copolymers (PBT/PBA). They can be used either individually or as a combination of two or more thereof.

It is preferred for the two biodegradable resin layers to have heat resistance. It is preferred for at least one of them to have hot water resistance.

When the biodegradable resin layer has "heat resistance", the resin *per se* making up the biodegradable resin layer does not melt at the boiling point of water. When at least one of the biodegradable resin layers has "hot water resistance", the resin making up that layer neither dissolves nor melts even when the layer is in contact with boiling water for a long time, so that the layer may not undergo any damage such as formation of holes through which hot water, etc. may pass.

Resins that can be used to make the biodegradable resin layer with hot water resistance include the above-recited aliphatic polyester resins, aliphatic polyester/aromatic polyester copolymer resins, and aliphatic polycarbonate resins except PCL and PBS/PBA; water insoluble polysaccharides, such as cellophane and chitosan; cellulose derivatives, such as cellulose acetate; unvulcanized natural rubber; unvulcanized polyisoprene; heat cured known shellac resins; and naturally occurring, hot water-resistant resins, such as hardened Japanese lacquer. In view of film forming properties, thermoplastic aliphatic polyesters and copolymers containing the same are preferred. The above-enumerated resins can be used either individually or as a combination of two or more thereof.

Resins that can be used to make the biodegradable resin layer with heat resistance include those listed above for making the biodegradable resin layer with hot water resistance and, in addition, polyvinyl alcohol resins, polysaccharides such as starch, proteins such as gelatin, polymalic acid, polyglutamic acid, and polyaspartic acid. From the viewpoint of film forming capabilities, preferred of them are those usable to form the biodegradable resin layer with hot water resistance, especially thermoplastic aliphatic polyester resins and copolymers containing the same. The above-described resins can be used either individually or as a combination of two or more thereof.

In order for the biodegradable resin layers to degrade in a practically acceptable time, the biodegradable resin layers preferably have a biodegradability (i.e., ultimate aerobic biodegradability according to JIS K6950 or K6953) of 30% or higher, more preferably 50% or higher, particularly preferably 60% or more.

A film made of the forenamed resins can be preferably used as the biodegradable resin layer. The film may be stretched uniaxially or biaxially if desired. A film of the resin is obtained by conventional common film formation methods, such as calendering, melt extrusion, and wet coating using a solution or emulsion of the resin followed by removal of the solvent or dispersion medium by evaporation.

The thickness of the biodegradable resin layer is decided appropriately according to necessity. From the standpoint of film strength and ease of film handling, the thickness is preferably 5 to 1000 μm, more preferably 10 to 500 μm.

The two biodegradable resin layers can be of the same or different resins.

Where they are formed of different resins, resins different in melting point are used preferably. In cases where the two biodegradable resin layers are made of different resins having different melting points, there is the following advantage. When, as will be explained *infra*, a container body is coated with the biodegradable film of the present invention by bonding the film directly to the surface of the container body, good adhesion is assured between the container body and the film by disposing the film with its biodegradable resin layer made of a resin having a lower melting point (low melting resin) facing the surface of the container body and bonding the low melting resin in its molten state to the container body. In this case the difference in melting point between the resins making the two biodegradable resin layers is preferably 5°C or greater, more preferably 15°C or greater.

The two biodegradable resin layers to be combined together are selected appropriately according to the end use of the resulting biodegradable film. Where, for example, the biodegradable film is to be shaped into a container by vacuum forming or a like method or to be superposed on the inner side of a biodegradable container, the combination preferably has a thermoformable biodegradable resin layer. Where the biodegradable film is used in a container that is adapted to receive hot water (e.g., an instant noodle container), it is preferred that the two biodegradable resin layers both have heat resistance and that at least one of them have hot water resistance.

The biodegradable moisture barrier layer (hereinafter sometimes simply referred to as a moisture barrier layer) of the biodegradable film according to the present invention is preferably made mainly of a biodegradable wax (hereinafter simply referred to as a wax), a polyvinyl alcoholresin, etc. for securing thermoformability. A wax is particularly preferred for ease of thermoforming.

In order for the moisture barrier layer to be equal in biodegradability to the resins making up the biodegradable resin layers with heat resistance, the wax to be used preferably has a biodegradability (JIS K6950 or K6953) of 30% or higher, more preferably 50% or higher, particularly preferably 60% or higher.

In order to secure storage stability of the biodegradable film, the wax preferably has a melting point of 40°C or higher, more preferably 60°C or higher. The melting point of waxes is measured in accordance with JIS K2235-5.3.

The wax that can be used includes vegetable waxes, animal waxes, and petroleum waxes.

Examples of the vegetable waxes are rice wax, carnauba wax, and candelilla wax. Candelilla wax is preferred of them for its adhesion to the biodegradable resin layers and its high melting point.

Examples of the animal waxes are bees wax, lanolin, and whale wax. Bees wax is preferred for its adhesion to the biodegradable resin layers.

The petroleum waxes include those having a melting point of 85°C or lower, such as microcrystalline wax and paraffin wax. Microcrystalline wax is preferred for its adhesion to the biodegradable resin layers. Synthetic waxes which are biodegradable are usable as well as a moisture barrier layer.

It is preferred for the wax used to make the moisture barrier layer to contain a heat resistant and biodegradable polymer. With such a polymer incorporated into the wax of the moisture barrier layer, destruction of the moisture barrier layer is suppressed, and the resulting biodegradable film has increased peel strength. Further, the wax containing such a polymer can retain adhesion even at or above the melting point of the wax. Furthermore, cracking of the wax layer is prevented thereby to maintain moisture proofness even when the film is bent.

The heat resistant, biodegradable polymer includes unvulcanized natural rubber, unvulcanized polyisoprene, and the aforementioned aliphatic polyester resins. From the standpoint of compatibility with the wax, polyisoprene or natural rubber is preferred. In using natural rubber, it is advisable to use natural rubber of which the protein content has been minimized from the viewpoint of smell and allergy.

The amount of the biodegradable polymer to be added to the wax is preferably 5 to 50% by weight for increased adhesion to the biodegradable film and enhanced prevention of cracking. It is more preferably 30% by weight or less, particularly preferably 20% by weight or less, for assuring moisture proofness.

The wax can contain additional components other than the biodegradable polymer, such as additives (e.g., antioxidants) and inorganic fillers. From the viewpoint of moisture proofness, the amount of such additional components is preferably not more than 20% by weight, more preferably not more than 10% by weight.

It is desirable for the moisture barrier layer to have lower moisture permeability measured by the dish method (JIS Z0208; condition B) than the aforesaid biodegradable resin layers.

The moisture barrier layer preferably has a thickness of 1 to 500 μm, more preferably 10 to 100 μm, so as to provide practical moisture proofness and to secure high-temperature strength of the biodegradable film.

It is preferable that the biodegradable film have thermoformability. When the biodegradable film has thermoformability, it does not break on being heated to a prescribed temperature and stretched uniaxially in opposite directions to double its original length.

The heating temperature in thermoforming the biodegradable film is decided appropriately depending on the kinds of the biodegradable resin used and the wax used in the moisture barrier layer and the thermoforming method (e.g., vacuum/pressure forming or pressing). The heating temperature should be selected so that the biodegradable film may be shaped with a proper overall thickness distribution and may retain sufficient moisture proofness. It is important for obtaining sufficient moisture proofness to effect thermoforming at a heating temperature at which variation of film thickness can be suppressed. Such a heating temperature as satisfies the requirements can be decided through optimization technology commonly practiced by those skilled in the art.

The heating temperature used in evaluating thermoformability as mentioned above should also be selected so that satisfactory results may be obtained as in actual forming. The following temperature range is a typical one from which the heating temperature could be selected to obtain, in most cases, satisfactory results. Where the biodegradable resin is a crystalline resin, the heating temperature range is from (Tm-40)°C to (Tm+20)°C, Tm being the melting peak temperature determined from a DSC melting curve of the resin. When the melting curve shows two or more melting peak temperatures, the peak with the greatest heat of melting is chosen. Where the biodegradable resin is a non-crystalline resin, the heating temperature range is from the glass transition temperature (Tg) to (Tg+50)°C.

In order for the biodegradable film of the present invention to degrade in a practical time period, for example, to degrade in 2 to 3 months in a composting bin, etc., the biodegradable film preferably has a biodegradability (i.e., ultimate aerobic biodegradability according to JIS K6950 or K6953) of 30% or higher, more preferably 50% or higher, particularly preferably 60% or more.

The biodegradable film of the present invention preferably has a moisture permeability (a water vapor transmission rate, converted to a value of 1 mm thick film, measured in accordance with the dish method as specified in JIS Z0208B) of 2 g·mm/m$^2$·24hr or less, more preferably 1 g·mm/m$^2$·24hr or less. The less moisture permeable, the more preferred. Assuming that moisture permeability is in inverse proportion to film thickness, the converted value of moisture permeability is obtained by multiplying the moisture permeability as determined by the dish method by the film thickness.

The biodegradable film of the present invention preferably has a moisture permeability of 2 g·mm/m$^2$·24hr or less, more preferably 1 g·mm/m$^2$·24hr or less, after being subjected to draw forming (including thermoforming) to a draw ratio (an areal draw ratio) of 200 to 1000%.

Taking into consideration the handling properties of the biodegradable film and strength of the film coating a container, etc., the biodegradable film of the present invention preferably has a peel strength of 0.1 N or higher, more preferably 1 N or higher, as measured in accordance with the method described in Examples given *infra*.

From the viewpoint of strength and formability of the film, the biodegradable film of the present invention preferably has a thickness of 10 to 2000 μm, more preferably 20 to 1000 μm.

The biodegradable film of the present invention essentially has at least two biodegradable resin layers and a biodegradable moisture barrier layer that is interposed between the biodegradable resin layers. It may further have an additional biodegradable resin layer(s) outside the biodegradable resin layers.

The method of producing the biodegradable film of the present invention is not particularly restricted as long as the layer structure having the biodegradable moisture barrier layer between the two biodegradable resin layers can be built up. For example, the biodegradable film can be produced by a method including the steps of making a film of a resin for the above-described biodegradable resin layer, forming a uniform film of a wax, etc. that can be used as a moisture barrier layer on one side of the biodegradable resin film, superposing a film of a resin for the above-described biodegradable resin layer, and uniting the films by pressure application or heat and pres sure application. In stead of superposing films in that way, the biodegradable film may have a folded structure which is formed by applying a material of the moisture barrier layer onto part of a film of a biodegradable resin layer and folding back the biodegradable resin layer to hold the moisture barrier layer in the fold.

The moisture barrier layer is formed by, for example, coating with a melt of the moisture barrier layer material or a method comprising applying a solution or emulsion of a moisture barrier layer material and removing the solvent by evaporation or a method comprising sandwiching a wax, etc. for forming the moisture barrier layer between the biodegradable resin films and hot pressing the laminate.

It is also possible to extrude the biodegradable resin(s) and the wax, etc. for forming the moisture barrier layer in their melted state in a multilayer configuration to form the biodegradable film all at once.

The biodegradable film of the present invention is available in cut sheets or continuous lengths. The two biodegradable resin layers are preferably fused together along the edges of the film so as to prevent the component of the moisture barrier layer from oozing out during storage in high temperatures. Specifically, the two biodegradable resin layers are preferably fused together along the periphery of a cut sheet or both side edges of a continuous length. While the method for fusion is not particularly limited, fusion is preferably carried out by sealing, such as impulse heat sealing or heat cutting, simultaneously with pressure application. With the biodegradable resin layers fused together along the edges, oozing of the moisture barrier component during storage can be prevented until use. Fusion of the edges is particularly effective when a large number of cut sheets are piled up or when the film in continuous length is stored in roll form. In addition, the biodegradable film with the fused edges is easy to handle.

The biodegradable film of the present invention is of wide application. It is used to coat the surface of a body of a biodegradable container according to the present invention (hereinafter described). It is also useful as a packaging film in various applications or as a material of biodegradable moistureproof paper (e.g., laminated paper composed of biodegradable paperboard and the biodegradable film of the invention). Such moistureproof paper can be folded or formed into biodegradable containers, such as cups and boxes.

The biodegradable film of the present invention per se can be formed by pressing, vacuum forming, and the like to make a biodegradable container. Such a biodegradable container can be used as an inner bag of what we call a bag-in-box package.

Even in the above-mentioned final form for an intended use, the biodegradable film preferably has its two biodegradable resin layers fused together along the edges so that the component of the moisture barrier layer may not ooze out from the edges. Where the biodegradable film is formed into a packaging bag or pouch, for example, the two biodegradable resin layers of facing films at the edges of sealed joints are preferably fusion bonded together to prevent leakage of the moisture barrier layer component. Where a container body is coated with the biodegradable film of the present invention by pressure forming or vacuum forming, trimming of the film is preferably carried out while fusing the cut edges of the two biodegradable resin layers by, for example, heat cutting under pressure thereby to prevent leakage of the moisture barrier layer component. Where the biodegradable film of the present invention is formed alone into the shape of a container, it is preferred to conduct trimming while fusing the cut edges of the two biodegradable resin layers by, for example, heat cutting under pressure similarly to the case where the film is used for coating.

The biodegradable container according to the present invention will then be described.

The biodegradable container of the present invention includes any structure of whatever shape in which liquids or solids can be put and held. It has a biodegradable container body the surface of which is coated with the above-described biodegradable film of the present invention. Where the biodegradable container is adapted to receive hot water, it has a biodegradable container body the surface of which is coated with the biodegradable film of the present invention that is composed of at least a biodegradable resin layer having heat resistance, a biodegradable moisture barrier layer, and a biodegradable resin layer having hot water resistance in that order from the side of the container body.

The container body of the biodegradable container of the present invention can be of any material as long as it is biodegradable. The container body preferably has a biodegradability (i.e., ultimate aerobic biodegradability according to JIS K6950 or K6953) of 30% or higher, more preferably 50% or higher, particularly preferably 60% or more.

Materials of the container body include fibrous materials, such as natural fibers and biodegradable synthetic fibers, naturally occurring polymers, the aforesaid biodegradable resins, and mixtures thereof. The natural fibers include wood pulp fiber, non-wood pulp fiber, silk, and wool. The biodegradable synthetic fibers include polylactic acid fiber, vinylon, and rayon. The naturally occurring polymers include starch and proteins.

The shape of the container body is not particularly limited and includes various forms of containers, such as cups, bowls, bottles, dishes, pots, boxes, and cylinders.

Methods for making the container bodies are not particularly restricted. For instance, container bodies can be made by wet or dry papermaking using fibrous materials or fabricating a sheet made by papermaking. Container bodies can also be made by injection molding, blow molding, vacuum forming or pressure forming using non-fibrous materials.

Of container bodies made of fibrous materials preferred are those prepared by straining a paper stock to form a wet container preform, which is dewatered and dried and those preparedby straining a paper stock to form awet sheet, dewatering and drying the wet sheet to form a dry sheet, cutting the sheet to predetermined shapes, and fabricating the resulting sheet by bending and bonding into container shape. Of container bodies made solely or mainly of pulp fiber preferred are pulp-molded articles prepared by straining a paper stock containing the fiber to form a wet preform and dewatering and drying the preform.

The biodegradable container is the above-described container body having the surface thereof coated with the biodegradable film of the present invention.

The part of the container body on which a coating layer of the biodegradable film is to be formed can be selected appropriately according to the use, the shape, and the like of the container. For instance, the coating layer is formed on the inner or outer side of the container body. Where the container is a cup, etc., the coating layer is preferably formed on at least the inner side of the container body.

Coating of the container body with the biodegradable film of the present invention can be performed by bonding the biodegradable film to the surface of the container body via an adhesive or by directly bonding the biodegradable film to the surface of the container body.

The adhesive that can be used to bond the biodegradable film and the container body is not particularly limited in composition as long as it is biodegradable. It is preferred for the adhesive to have a biodegradability (i.e., ultimate aerobic biodegradability according to JIS K6950 or K6953) of 30% or higher, more preferably 50% or higher, particularly preferably 60% or more, similarly to the biodegradable film.

Useful adhesives include starch, polyvinyl alcohol, glue, gelatin, casein, unvulcanized natural rubber, and unvulcanized polyisoprene. It is also possible to use, as an adhesive, a biodegradable resin or a naturally occurring resin having a lower melting point than the biodegradable resin layer facing the container body so that the biodegradable film and the container body may be bonded together by hot melting the adhesive.

In using an adhesive that develops adhesiveness on evaporating its solvent, adhesion can be accomplished by applying a solution containing an adhesive component to at least one of the film and the container body or applying the adhesive component to one of the film and the container body and applying the solvent to the other.

Where the biodegradable film is directly bonded to the surface of the container body, the direct bonding can be carried out, for example, as follows. The biodegradable film is disposed on the inner surface of the container body and vacuum- or pressure-formed while heating the container body from its outer side and the biodegradable resin layer of the biodegradable film is bonded to the inner side of the container body.

The method of producing the biodegradable container of the present invention is not limited to the above-described coating methods. Any method by which the surface of a biodegradable container body is coated with the biodegradable film of the invention can be employed.

In case where the container body is made of the above-recited fibrous material, the biodegradable container is preferably produced by coating the surface (e.g., the inner or outer surface) of the container body with the biodegradable film of the invention by vacuum forming or pressure forming with the air permeability of the container body taken advantage of. Vacuum forming or pressure forming can be performed in a manner commonly used in the manufacture of paper containers and pulp molded containers.

The biodegradable container of the present invention also includes one formed of biodegradable moistureproof paper hereinafter described. Such a container is produced by fabricating biodegradable moistureproof paper by bending into the shape of a container.

The biodegradable containers according to the present invention have wide application. They can be used for holding not only foods but commodities, such as detergents, and various industrial materials. They are particularly suitable as food containers in which hot water is to be poured on use, such as soup cups and ready-to-eat instant food containers, and containers filled with liquid contents, such as beverages and commodities, at high temperatures for sterilization or like purposes.

The biodegradable film-coated biodegradable containers of the present invention are evaluated for heat resistance or hot water resistance according to the use.

The biodegradable moistureproof paper according to the present invention will now be described.

The biodegradable moistureproof paper of the present invention is biodegradable paper coated with the biodegradable film of the present invention.

The biodegradable paper to be used includes paper made of wood pulp or non-wood pulp and recycled paper free from non-biodegradable materials.

The thickness of the biodegradable paper can be decided appropriately according to the use.

The method for coating the biodegradable paper with the biodegradable film of the invention is not particularly limited. For instance, an adhesive is used in the same manner as in coating the above-described container body with the biodegradable film, or the biodegradable paper and the biodegradable film are bonded by heat lamination.

The biodegradable container or biodegradable moistureproof paper according to the present invention can also be produced by providing the aforementioned biodegradable resin layer, moisture barrier layer, and biodegradable resin layer in that order by film formation directly on the surface of the container body or the biodegradable paper. The biodegradable resin layer can be formed by applying a solution or emulsion containing the resin used to form the layer and drying the coating film to evaporate the solvent or the dispersion medium. The moisture barrier layer can be formed by, for example, applying a melt of the wax used to form the layer or applying a solution or emulsion containing the wax component, followed by evaporating the solvent or the dispersion medium.

The biodegradable moistureproof paper of the invention is useful as a material of the biodegradable container of the invention, moistureproof wrapping paper, moistureproof wallpaper, and the like.

The present invention will now be illustrated in greater detail with reference to Examples, but it should be understood that the invention is not construed as being limited thereto.

Biodegradable films were prepared in accordance with the procedures described in Examples 1, 2, and 3 hereinafter given. The resulting biodegradable films were examined for biodegradability, moisture permeability, hot water resistance, thermoformability, and peel strength. In Comparative Example 1, a non-biodegradable polyethylene film that has been used as an inner layer of a f ood container, etc. was evaluated for moisture permeability, hot water resistance, and thermoformability. The results obtained are shown in Table 1.

In Example 4, the inner side of a container body (described *infra*) was coated with the biodegradable film of Example 1 by vacuum forming in accordance with the procedure described. Biodegradable containers were also produced in accordance with the procedures described in Comparative Examples 2 and 3 given layer. These containers were tested for moisture permeability in accordance with the method described *infra*. The test results obtained are shown in Table 2.

EXAMPLE 1

Preparation of wax for moisture barrier layer:

In 50 cc of n-heptane (solvent) was dissolved by stirring 1.4 g of unvulcanized natural rubber (hereinafter simply referred to as natural rubber). To the solution was added 12.6 g of micracrystalline wax (Hi-Mic 1070, available from Nippon Seiro Co., Ltd.), and the mixture was heated to 60°C while stirring to dissolve the wax. The solvent was evaporated by means of a hot air (80°C) dryer to prepare a wax containing 10 wt% natural rubber (hereinafter referred to as a natural rubber-containing wax).

Laminating step:

Four grams of the natural rubber-containing wax was put on a film serving as a biodegradable resin layer (a film of a polycaprolactone/polyethylene succinate polyblend, Celgreen PHB05, available from Daicel Chemical Industries, Ltd.; 20 cm x 15 cm x 100 μm (t); melting point: 113°C). The Celgreen film having the wax on was sandwiched between a pair of polyester films having been made releasable with a silicone resin with the releasable sides inward. The laminate was pressed on a heat press set at 80°C under a pressing force of 3.8 kgf/cm² for 1 minute to form a primary film having on one side thereof a uniform layer of the natural rubber-containing wax. The polyester film was stripped off to expose the natural rubber-containing wax side. The same biodegradable resin layer film as used above was superposed on the wax side, and the same polyethylene film as used above was put thereon. The laminate was pressed on a heat press set at 80°C under a pressing force of 3.8 kgf/cm$^2$ for 1 minute to obtain a biodegradable film composed of two biodegradable resin layers and a moisture barrier layer of the natural rubber-containing wax interposed between the resin layers and having a total thickness of 400 μm.

EXAMPLE 2

A biodegradable film having a total thickness of 400 μm was prepared in the same manner as in Example 1, except that natural rubber was not incorporated into the wax for the moisture barrier layer.

EXAMPLE 3

A biodegradable film having a total thickness of 400 μm was prepared in the same manner as in Example 1, except for replacing natural rubber used in Example 1 with polyisoprene shown below and changing the amount of the wax to 5.6 g to prepare a wax containing 20 wt% of polyisoprene.

EXAMPLE 4

A 10 wt% aqueous solution of polyvinyl alcohol (PVA) (VPB107, available from Kuraray Co., Ltd.) was applied to one side of the biodegradable film of Example 1 with a bar coater and dried with an air dryer at 80°C for 1 hour to form a 3 μm thick PVA film as an adhesive layer. The inner side of a container body (inner diameter of the top opening: 90 mm; inner diameter of the bottom: 60 mm; height: 100 mm; inner surface area: 300 cm$^2$) was wetted with water by spraying. The biodegradable film was bonded on the inner side of the container body with the PVA film inside by vacuum forming to produce a cup-shaped biodegradable container.

COMPARATIVE EXAMPLE 1

A 200 μm thick non-biodegradable polyethylene film was evaluated in the same manner as in Examples 1 and 2.

COMPARATIVE EXAMPLE 2

A biodegradable container was prepared in the same manner as in Example 3, except that the biodegradable f ilm used in Example 3 was replaced with a 200 μm thick film of the biodegradable resin(Celgreen PHB05) having the PVA film provided on one side thereof to cover the inner surface of the container body.

COMPARATIVE EXAMPLE 3

A biodegradable container was prepared in the same manner as in Example 3, except that a 150 μm thick non-biodegradable polyethylene film having the PVA film provided on one side thereof was used in place of the biodegradable film of Example 3 to cover the inner surface of the container body.

Evaluation on moisture permeability of film:

Moisture permeability of each of the resulting films was measured in accordance with the dish method of JIS Z0208 at 40°C and 90% RH.

Evaluation on hot water resistance:

The biodegradable film was cupped along the inner side of the same container body as used in Example 3. Boiling water (in a room temperature and atmospheric pressure environment) was poured into the cup of the film and allowed to stand for 15 minutes. The film was inspected with the naked eye for any leak of hot water. The film was also inspected for oozing of the composition making the moisture barrier layer, which was examined by whether the composition was floating on the surface of water. A film that neither leaked water nor oozed the moisture barrier layer composition was judged "hot water resistant".

Evaluation on thermoformability:

A 150 mm x 150 mm square cut out of the biodegradable film was left to stand in an oven set at 100°C for 2 minutes and then pulled on the opposing edges to double the original length to see if the biodegradable film broke. A film that did not break was judged "thermoformable".

Evaluation of peel strength:

A 20 mm wide and 50 mm long test piece was cut out of the biodegradable film. The joined two biodegradable resin layers were peeled apart to a length of about 10 mm from one end of the test piece. The ends of the separated layers were clamped and pulled apart on a tensile tester (Tensilon, supplied by Orientec) at a speed of 20 mm/min to measure the maximum tensile load, which was taken as a peel strength.

Evaluation on moisture permeability of container:

Moisture permeability of the containers obtained in Example 4 and Comparative Examples 2 and 3 was evaluated as follows. Fifty grams of calcium chloride was put into each container, the opening of the container was closed with a glass plate, and the gap between the container and the glass plate was sealed with wax. The container was left to stand in a constant temperature/humidity chamber set at 40°C and 90% RH for one week. The moisture proofness of the container was evaluated by the difference in total weight of the container, calcium chloride, the sealing wax, and the glass plate between before and after the standing. Further, an average moisture permeability was calculated in accordance with the following equation, taking the draw ratio (areal) of the film in vacuum forming as 400% and the inner surface area of the container as 0.03 m$^2$.

Average moisture permeability =

{weight difference between before and after standing

(g) / [the number of days of standing x inner surface area

of container (m$^2$)]} x [film thickness before forming

(mm)/draw ratio of film (%)]

TABLE 1

| | Moisture Perme-ability (g·mm/m$^2$·24hr) | Hot Water Resis-tance | Thermo-forma-bility | Peel Strength (N) | | Bio-deg rad-ability |
| --- | --- | --- | --- | --- | --- | --- |
| | | | | 22°C | 60°C | |
| Ex. 1 | 3 | yes | yes | 0.8 | 0.12 | yes |
| Ex. 2 | 3 | yes | yes | 0.3 | ~0 | yes |
| Ex. 3 | 2 | yes | yes | 2 | 0.1 | yes |
| Comp. Ex. 1 | 3 | yes | yes | -* | -* | no |

* Not measured because of the single layer structure

TABLE 2

| | Weight Difference between before and after Standing (g) | Biodegradability | Avg. Moisture Permeability (g·mm/m$^2$·24hr) |
| --- | --- | --- | --- |
| Ex. 4 | 1.7 | yes | 0.8 |
| Comp. Ex. 2 | 39.2 | yes | 9.3 |

TABLE 2   (continued)

| | Weight Difference between before and after Standing (g) | Biodegradability | Avg. Moisture Permeability (g·mm/m$^2$·24hr) |
|---|---|---|---|
| Comp. Ex. 3 | 1.7 | no | 0.3 |

As is revealed in Table 1, it was confirmed that the biodegradable films obtained in Examples 1, 2, and 3 (according to the present invention) were equal or superior to the film of Comparative Example 1 in terms of moisture proofness and hot water resistance. In particular, the film of Example 1 containing natural rubber in the wax of the moisture barrier layer and that of Example 3 containing polyisoprene in the wax of the moisture barrier layer exhibited high peel strength and excellent thermoformability.

It was also confirmed by the results in Table 2 that the biodegradable container obtained in Example 4 (according to the present invention) was more moistureproof than the film with no moisture barrier layer (Comparative Example 2) and was equal in moisture permeability to the polyethylene film-coated container (Comparative Example 3).

It was additionally confirmed that the average moisture permeability of the containers was lower than the moisture permeability of the biodegradable film *per se* before forming. Industrial Applicability:

The present invention provides a biodegradable film excellent in hot water resistance and moisture proof ness and a biodegradable container and biodegradable moistureproof paper having the biodegradable film.

**Claims**

1.   A biodegradable film comprising two biodegradable resin layers and a biodegradable moisture barrier layer interposed between the resin layers.

2.   The biodegradable film according to claim 1, wherein the moisture barrier layer is made mainly of a biodegradable wax.

3.   The biodegradable film according to claim 2, wherein the moisture barrier layer comprises the biodegradable wax and a biodegradable, heat-resistant polymer.

4.   The biodegradable film according to claim 1, wherein the polymer is natural rubber or polyisoprene.

5.   The biodegradable film according to claim 1, which has thermoformability.

6.   The biodegradable film according to claim 1, wherein the two biodegradable resin layers have heat resistance, and at least one of the two biodegradable resin layers has hot water resistance.

7.   The biodegradable film according to claim 1, which has a moisture permeability of 2 g·mm/m$^2$·24hr or less.

8.   The biodegradable film according to claim 1, wherein the two biodegradable resin layers are formed of the respective resins different in melting point.

9.   The biodegradable film according to claim 1, which is in continuous length and has the two biodegradable resin layers fused together along at least part of the edges thereof.

10.   The biodegradable film according to claim 1, which is in cut sheet and has the two biodegradable resin layers fused together along at least part of the periphery thereof.

11.   A biodegradable container comprising a biodegradable container body having the surface thereof coated with the biodegradable film according to claim 1.

12.   The biodegradable container according to claim 6, wherein the container body is made of pulp fiber.

13.   Biodegradable moistureproof paper comprising biodegradable paper coatedwith the biodegradable film according to claim 1.

**14.** A biodegradable container formed of the biodegradable film according to claim 1.

## INTERNATIONAL SEARCH REPORT

| | International application No. |
|---|---|
| | PCT/JP03/01872 |

**A. CLASSIFICATION OF SUBJECT MATTER**
Int.Cl⁷ B32B27/08, B32B27/00, C08L91/06, B65D1/00

According to International Patent Classification (IPC) or to both national classification and IPC

**B. FIELDS SEARCHED**

Minimum documentation searched (classification system followed by classification symbols)
Int.Cl⁷ B32B27/00-27/42, B65D1/00-1/48, C08L91/06

Documentation searched other than minimum documentation to the extent that such documents are included in the fields searched

| | | | |
|---|---|---|---|
| Jitsuyo Shinan Koho | 1926-1996 | Jitsuyo Shinan Toroku Koho | 1996-2003 |
| Kokai Jitsuyo Shinan Koho | 1971-2003 | Toroku Jitsuyo Shinan Koho | 1994-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| P,A | JP 2003-40242 A (Toppan Printing Co., Ltd.), 13 February, 2003 (13.02.03), Page 2 (Family: none) | 1-14 |
| P,A | JP 2002-225841 A (Toppan Printing Co., Ltd.), 14 August, 2002 (14.08.02), Claims (Family: none) | 1-14 |
| P,A | JP 2002-200725 A (Toyo Seikan Kaisha, Ltd.), 16 July, 2002 (16.07.02), Par. No. [0031] (Family: none) | 1-14 |

☐ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 May, 2003 (27.05.03) | 01 July, 2003 (01.07.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

12